# EUROPÄISCHE PATENTSCHRIFT

(11) **EP 0 761 179 B1**
(45) Veröffentlichungstag und Bekanntmachung des Hinweises auf die Patenterteilung: **09.12.1998**
(21) Anmeldenummer: 95114037.5
(22) Anmeldetag: 07.09.1995
(51) Int. Cl.: A61C 13/273

(54) **Steckriegel für eine Vorrichtung zur lösbaren Befestigung eines herausnehmbaren Zahnersatzes an einem festsitzenden Zahnersatz**
Lock for a retention device for locking a removable prosthesis to an abutment tooth
Verrou pour un dispositif destiné à la fixation d'une prothèse dentaire amovible à un dent support

(43) Veröffentlichungstag der Anmeldung: 12.03.1997
(73) Patentinhaber: Si-tec GmbH Dental-Spezialartikel, 58285 Gevelsberg (DE)
(72) Erfinder: Krahl, Bernd, Dr., D-58093 Hagen (DE)
(74) Vertreter: Hilleringmann, Jochen, Dipl.-Ing.

(56) Entgegenhaltungen:
- DE-A- 3 534 751
- DE-B- 2 905 106
- DE-U- 9 409 150
- US-A- 4 464 090

## Beschreibung

Die Erfindung betrifft einen Steckriegel für eine Vorrichtung zur lösbaren Befestigung eines herausnehmbaren Zahnersatzes an einem festsitzenden Zahnersatz.

Zur lösbaren Befestigung von herausnehmbarem (Teil-) Zahnersatz (partielle Dentalprothese) an festsitzendem Zahnersatz (z.B. überkrontem Zahnstumpf) sind eine Vielzahl von Verbindungsvorrichtungen bekannt, bei denen zur Verriegelung Steckriegel, d.h. axial verschiebbare Verriegelungsstifte verwendet werden. Der Verriegelungsstift ist dabei zwischen einer Freigabe- und einer Verriegelungsposition in einer Führungsvorrichtung geführt, die in den herausnehmbaren Zahnersatz eingearbeitet ist, und zwar in demjenigen (Ersatz-) Zahn, der an dem festsitzenden Zahnersatz angrenzt. Der festsitzende Zahnersatz weist eine Aufnahmevorrichtung für den Verriegelungsstift (sogenannte Matrize) auf, in die der Verriegelungsstift in seiner Verriegelungsposition eintaucht. In der Freigabeposition ist der Verriegelungsstift außer Eingriff mit der Aufnahmevorrichtung.

Steckriegel sollen für den Patienten und/oder den Zahnarzt einfach in der Bedienung sein sowie zuverlässig arbeiten, insbesondere sich nicht ungewollt aus ihrer Verriegelungsposition herausbewegen. Aus DE 94 09 152 U1 ist ein Steckriegel bekannt, der mittels einer Schraubendruckfeder in die Verriegelungsposition vorgespannt ist. Zum Herausnehmen der Dentalprothese ist es erforderlich, den bekannten Steckriegel gegen die Kraft der Schraubendruckfeder in die Freigabeposition zu bewegen und in dieser Stellung zu halten. Dies kann mitunter schwierig sein und erfordert eine gewisse Geschicklichkeit, wenn zur Befestigung der Dentalprothese zwei Steckriegel vorgesehen sind (z.B. im Falle einer Dentalprothese der beidseitigen Molaren des Unter- oder Oberkiefers).

Aus DE 94 09 150 U1 ist ein Steckriegel bekannt, bei dem der Verriegelungsstift in einer Klemmhülse axial verschiebbar geführt und mittels Friktion in der jeweiligen Verschiebungsposition gegen ungewollte Bewegungen gesichert ist. Schließlich ist aus der DE-B-29 05 106 ein Steckriegel gemäß dem Oberbegrif von Anspruch 1 bekannt, wobei der Verriegelungsstift des Dental-Steckriegels mit einem elastischen Kragen bzw. Ring versehen ist, der sich an der Innenseite einer Führungsbohrung abstützt und somit den Verriegelungsstift gegen ungewollte Bewegungen durch Friktion sichert.

Der Erfindung liegt die Aufgabe zugrunde, eine Verriegelungsvorrichtung zur lösbaren Befestigung eines herausnehmbaren Zahnersatzes an einem festsitzenden Zahnersatz zu schaffen, wobei sich der Verriegelungsstift bei Verschiebung in die Verriegelungs- und die Freigabeposition selbsttätig in die betreffende Endposition bewegt bzw. die Bewegung in die Endposition unterstützt wird und zuverlässig in diesen Endpositionen verharrt und die Verriegelungsvorrichtung einen konstruktiv einfachen und störungsunanfälligen Aufbau aufweist und bequem zu betätigen ist.

Zur Lösung dieser Aufgabe wird mit der Erfindung eine Verriegelungsvorrichtung nach Anspruch 1 vorgeschlagen; die Merkmale vorteilhafter Ausgestaltungen der Erfindung sind jeweils in den Unteransprüchen aufgeführt.

Nach der Erfindung weist die Verriegelungsvorrichtung einen axial verschiebbaren in einer Führungsvorrichtung geführten Verriegelungsstift auf, der sich insbesondere manuell zwischen einer Verriegelungsposition und einer Freigabeposition verschieben läßt. Die Führungsvorrichtung ist mit einer Rückhalte-Federvorrichtung versehen, die den Verriegelungsstift (mittelbar oder unmittelbar) durch Federkraft sowohl in der Verriegelungsposition als auch in der Freigabeposition gegen ungewollte Bewegungen aus diesen Positionen heraus sichert. Bei Überwindung der (in der Verriegelungs- und in der Freigabeposition) auf den Verriegelungsstift wirkenden Rückhaltekräfte läßt sich dieser verschieben.

Bei der erfindungsgemäßen Verriegelungsvorrichtung wird der Verriegelungsstift mittels ein und derselben Federvorrichtung sowohl in der Freigabeposition als auch in der Rückhalteposition gesichert. Wegen dieser Doppelfunktion ist die Anzahl an Einzelteilen der Verriegelungsvorrichtung reduziert. In beiden Endstellungen (Freigabe- und Verriegelungsposition) ist der Verriegelungsstift in seiner Führungsvorrichtung gegen ungewollte axiale Verschiebungen gesichert gehalten. Diese Sicherungs- und Haltefunktion wird also bei der Erfindung nicht durch ein Zusammenwirken von Verriegelungsstift mit Matrize bzw. Patrize realisiert. Dies reduziert die Störanfälligkeit der Verriegelungsvorrichtung. Die Rückhalte-Federvorrichtung übt ihre größte Rückhaltekraft vorzugsweise in den beiden Endstellungen des Verriegelungsstiftes aus, so daß die den Verriegelungsstift betätigende Person spürt, wann sich der Verriegelungsstift aus einer dieser sowie in eine dieser Endstellungen hinein- bzw. herausbewegt. Vorzugsweise rastet der Verriegelungsstift infolge der Rückhalte-Federvorrichtung in die jeweilige Endstellung ein.

Nach der Erfindung ist ferner vorgesehen, daß die Führungsvorrichtung und/oder die Federvorrichtung Axialbewegungen des Verriegelungsstiftes in mindestens einer oder beiden Endstellungen unterstützt, und zwar insbesondere dergestalt, daß der Verriegelungsstift ab Erreichen einer Position in der Nähe der jeweiligen Endstellung sich selbsttätig in die Freigabe- bzw. Verriegelungsposition bewegt. Hierzu wird zweckmäßigerweise die auf den Verriegelungsstift wirkende Kraft der Federvorrichtung ausgenutzt.

Die Federvorrichtung der erfindungsgemäßen Verriegelungsvorrichtung übt auf den Verriegelungsstift eine radial wirkende Kraft aus (entweder unmittelbar über eine direkt am Verriegelungsstift angreifende Feder oder mittelbar über ein Halte- o.dgl. Element, das zwischen Verriegelungsstift und Feder angeordnet ist). Sobald der Verriegelungsstift aus einer seiner beiden Endstellungen herausbewegt ist, befindet sich die Federvorrichtung in einem Vorspannzustand; die Überführung in diesen Vorspannzustand bestimmt unter anderem die Rückhaltekraft, mit der Verriegelungsstift in seinen Endstellungen gesichert ist. In den Endstellungen des Verriegelungsstiftes befindet sich die Federvorrichtung zweckmäßigerweise in einem Entlastungszustand.

Nach der Erfindung ist außerdem vorgesehen, daß der Verriegelungsstift mindestens eine konische Umfangsschrägfläche zur Umsetzung einer durch die Rückhalte-Federvorrichtung erzeugbaren radial auf den Verriegelungsstift wirkenden Radialkraft in eine axial auf den Verriegelungsstift wirkende Axialkraft zur axialen Verschiebung des Verriegelungsstiftes oder zur Unterstützung einer axialen Verschiebung des Verriegelungsstiftes in die Verriegelungs- und/oder Freigabeposition aufweist. Zweckmäßig ist es, wenn der Verriegelungsstift mit zwei derartigen konischen Axialabschnitten versehen ist, von denen die eine der Verriegelungsposition und die andere der Freigabeposition zugeordnet ist. Die beiden Umfangsschrägflächen unterscheiden sich bezüglich ihrer Ausrichtung zur Längsachse der Verriegelungsposition insofern, als die Axialkräfte in einander entgegengesetzte Richtungen weisen. Wie oben bereits dargelegt, kann die von der Rückhalte-Federvorrichtung erzeugte Radialkraft unmittelbar und mittelbar auf den Verriegelungsstift einwirken.

In jedem konischen Axialabschnitt weist der Verriegelungsstift also eine umlaufende und schräg zur Axialerstreckung des Stiftes gerichtete Umfangsschrägfläche auf. Im Bereich dieser Axialabschnitte vergrößert bzw. verkleinert sich also der Durchmesser bzw. Querschnitt des Verriegelungsstiftes. Wirkt bei entsprechender Positionierung des Verriegelungsstiftes die Feder oder das Halte- o.dgl. Element der Rückhalte-Federvorrichtung radial auf den Verriegelungsstift ein, so entsteht wegen der Umfangsschrägfläche eine auf den Verriegelungsstift wirkende Axialkraftkomponente, die in Richtung des sich vergrößernden Durchmessers bzw. Querschnitts des Verriegelungsstiftes wirkt und den Verriegelungsstift axial verschiebt bzw. zur Unterstützung einer Axialverschiebung des Verriegelungsstiftes beiträgt.

Vorzugsweise ist der Verriegelungsstift mit einem ballig ausgebildeten Axialabschnitt versehen, dessen beiden Endabschnitte die beiden Umfangsschrägflächen bilden.

Zweckmäßigerweise sind den beiden Endstellungen des Verriegelungsstiftes zwei axial voneinander beabstandete Verjüngungsbereiche zugeordnet, innerhalb derer der Verriegelungsstift einen Durchmesser aufweist, der kleiner ist als der Durchmesser des Stiftes innerhalb zumindest eines Teils des zwischen den beiden Verjüngungsbereichen sich erstreckenden Axialabschnitts. In dem Axialabschnitt des Verriegelungsstiftes zwischen den beiden Verjüngungsbereichen und außerhalb derselben liegt entweder die Feder oder ein Halte- o. dgl. Element der Rückhalte-Federvorrichtung unter radial nach innen gerichteter Vorspannung an dem Umfang des Verriegelungsstiftes an.

Ein denkbar einfacher Aufbau der Rückhalte-Federvorrichtung läßt sich vorteilhaft dadurch realisieren, daß die Rückhalte-Federvorrichtung ein den Verriegelungsstift seitlich umgreifendes U-förmiges Federelement aufweist, das zwei Federschenkelabschnitte und einen diese miteinander verbindenden Basisabschnitt aufweist. Die beiden Federschenkelabschnitte halten den Verriegelungsstift in den beiden Endstellungen und sichern den Verriegelungsstift auf diese Weise gegen ungewollte axiale Verschiebungen. Das U-förmige Federelement stellt ein einerseits einfach herzustellendes (Metall-) Teil dar, das andererseits zuverlässig arbeitet. Die oben erwähnten Verjüngungsbereiche des Verriegelungsstiftes und die Federschenkelabschnitte des U-förmigen Federelements weisen - bei Betrachtung in axialer Erstreckung des Verriegelungsstiftes - im wesentlichen die gleiche Abmessung auf.

Vorteilhaft ist es, wenn sich an die einander zugewandten Enden der Verjüngungsbereiche die konischen Axialabschnitte anschließen. Ferner ist es zweckmäßig, wenn der Verriegelungsstift zwischen den beiden Verjüngungsbereichen eine ballig ausgebildete Umfangsfläche aufweist, deren axiale Endabschnitte die Umfangsschrägflächen zum Umsetzen der Radial-Vorspannkraft der Federvorrichtung in eine axiale Bewegungskomponente des Verriegelungsstiftes darstellen.

Zur Begrenzung der Verschiebung des Verriegelungsstiftes über dessen Endstellungen hinaus schließen sich an die einander abgewandten Enden der beiden Verjüngungsbereiche insbesondere radial verlaufende Anschlagflächen für die Federschenkelabschnitte des Federelementes an. Damit fungieren die Federschenkelabschnitte einerseits als Anschlag zur Begrenzung der axialen Verschiebung des Verriegelungsstiftes über die Endstellung hinaus und andererseits als Sicherungsvorrichtung zum Sichern des Verriegelungsstiftes gegen ungewollte axiale Verschiebungen in den Endstellungen. Eine letzte Funktion der Federschenkelabschnitte ist in deren Zusammenwirken mit den Umfangsschrägflächen zur Umsetzung der Radialkräfte in die Axialverschiebung verursachende bzw. unterstützende Axialkräfte.

Allgemein ausgedrückt weist also die Führungsvorrichtung und/oder die Rückhalte-Federvorrichtung und/oder der Verriegelungsstift eine Verschiebungsbegrenzungsvorrichtung zur Begrenzung der Verschiebung des Verriegelungsstiftes über die beiden Endstellungen hinaus auf.

Der erfindungsgemäße Verriegelungsstift weist ein Verriegelungsende und ein Betätigungsende auf. Mit seinem Verriegelungsende wirkt der Verriegelungsstift mit einer Aufnahmevorrichtung zusammen, die an dem festsitzenden Zahnersatz angeordnet ist. Die Führungsvorrichtung, der Verriegelungsstift sowie die Rückhalte-Federvorrichtung sind demgegenüber an dem herausnehmbaren Zahnersatz angeordnet. Zweckmäßigerweise ist das Betätigungsende des Verriegelungsstiftes derart ausgebildet, daß sich der Verriegelungsstift von Hand oder mittels eines Werkzeuges vorzugsweise in beide axialen Richtungen verschieben läßt. Insbesondere ist das Betätigungsende des Verriegelungsstiftes mit einem Flansch zum Untergreifen mittels eines Werkzeuges oder mittels des Nagels eines Fingers versehen, wobei der Flansch in der Verriegelungsposition des Verriegelungsstiftes unter Bildung eines sich dabei zumindest im Umfangsbereich des Flansches ergebenden Zwischenraums an der Führungsvorrichtung anliegt. Die Führungsvorrichtung für den Verriegelungsstift weist - in axialer Erstreckung des Verriegelungsstiftes betrachtet - ein der Aufnahmevorrichtung des festsitzenden Zahnersatzes zugewandtes erstes und ein der Aufnahmevorrichtung abgewandtes zweites Ende auf. Das erste Ende der Führungsvorrichtung ist also dem Verriegelungsende des Verriegelungsstiftes zugeordnet, während das zweite Ende der Führungsvorrichtung dem Betätigungsende des Verriegelungsstiftes zugeordnet ist. Das Verriegelungsende des Verriegelungsstiftes steht in der Verriegelungsposition über das erste Ende der Führungsvorrichtung über (um zur Befestigung des herausnehmbaren Zahnersatzes an dem festsitzenden Zahnersatz in dessen Aufnahmevorrichtung einzutauchen). In der Freigabeposition des Verriegelungsstiftes fluchtet dessen Verriegelungsende mit dem ersten Ende der Führungsvorrichtung oder springt gegenüber diesem ersten Ende der Führungsvorrichtung axial zurück.

In vorteilhafter Weiterbildung der Erfindung weist die Führungsvorrichtung eine Hülsenanordnung auf, in der Verriegelungsstift geführt und von der Verriegelungsstift aufgenommen ist. Diese Hülsenanordnung ist fest mit dem herausnehmbaren Zahnersatz verbunden. Vorzugsweise ist die Führungsvorrichtung mit einer beidendig offenen Innenhülse für den Verriegelungsstift versehen, die eine dem Verriegelungsstift zugewandte Innenumfangsfläche und eine Außenumfangsfläche aufweist. In der Außenumfangsfläche sind zwei zueinander parallel verlaufende Nuten angeordnet, die derart tief ausgebildet sind, daß sich zwei diametral gegenüberliegende (Langloch-)Durchbrechungen ergeben. Die Tiefe der Nuten der Außenumfangsfläche ist demzufolge größer als die Wandstärke der Innenhülse. Das Verhältnis zwischen Innenhülsen-Wandstärke und Nutentiefe bestimmt die Erstreckung der Durchbrechungen in Richtung des Nutenverlaufs. Der Abstand der Gründe bzw. Böden der in der gleichen Radialebene angeordneten Nuten ist im wesentlichen gleich dem Abstand der beiden parallel zueinander verlaufenden Federschenkelabschnitte des U-förmigen Federelementes gewählt. Dieses Federelement ist mit seinen beiden Federschenkelabschnitten in den Nuten liegend angeordnet. Im Bereich der Durchbrechungen stehen dann die Federschenkelabschnitte radial nach innen über die Innenumfangsfläche der Innenhülse über. Bei in der Innenhülse befindlichem Verriegelungsstift umgreifen demzufolge die Federschenkelabschnitte den Verriegelungsstift an zwei einander gegenüberliegenden Seiten. Damit der Basisabschnitt des U-förmigen Federelementes in dessen an der Innenhülse festgelegten Zustand nicht radial über den Außenumfangsfläche der Innenhülse übersteht, weist die Innenhülse zumindest eine Verbindungsnut auf, die zwei der einander gegenüberliegenden Axialenden der die Federschenkelabschnitte aufnehmenden Nuten verbindet. Diese Verbindungsnut nimmt dann den Basisabschnitt des Federelementes auf, der zweckmäßigerweise der Krümmung der Innenhülse angepaßt ist, selbst also nach Art eines Kreisbogensegments ausgebildet ist. Diese mindestens eine Verbindungsnut in der Außenumfangsfläche der Innenhülse wird zweckmäßigerweise durch eine umlaufende Einfräsung (Umfangsringnut) realisiert. Diese Umfangseinfräsung wird dann an zwei diametral gegenüberliegenden Seiten vertieft, wobei ihr Grund abgeflacht wird. Hierdurch entstehen die beiden die Federschenkelabschnitte aufnehmenden Nuten sowie deren Durchbrechungen zum Innern der Innenhülse.

Zur festen Verbindung mit dem herausnehmbaren Zahnersatz weist die Aufnahmevorrichtung eine beidseitig offene Außenhülse auf, in der die Innenhülse festlegbar ist. Diese Festlegung erfolgt vorzugsweise durch Verschrauben. Hierbei sind dann Innen- und Außenhülse jeweils zylindrisch ausgebildet. Die Außenhülse weist an ihrem dem zweiten Ende der Führungsvorrichtung zugewandten Axialende eine Konus-Innenfläche auf, während die Innenhülse an diesem Ende der Führungsvorrichtung eine Konus-Außenfläche mit zur Konus-Innenfläche passendem Konuswinkel aufweist.

Das dem Betätigungsende des Stiftes zugewandte axiale Ende der Innenhülse weist in seiner Stirnseite vorteilhafterweise Vertiefungen auf, die der Aufnahme der freien Enden von Schenkeln eines Werkzeuges dienen. Mittels dieses Werkzeuges läßt sich die Innenhülse aus der und in die Außenhülse heraus- bzw. hineinschrauben. Vorteilhafterweise sind zwei diametral gegenüberliegende Vertiefungen zur Aufnahme der beiden Enden zweier Werkzeug-Schenkel vorgesehen. Diese beiden Schenkel verlaufen dann an zwei einander gegenüberliegenden Seiten des Betätigungsendes des Stiftes. Der vorzugsweise am Betätigungsende des Stiftes angeordnete Flansch überragt diese beiden Vertiefungen, weshalb die Werkzeug-Schenkel an ihren Innenseiten mit Aussparungen versehen sind, in denen sich der Flansch des Verriegelungsstiftes in dessen Freigabeposition befindet. Im übrigen sind die Schenkel des Werkzeuges derart ausgebildet, daß das Werkzeug bei in seiner Freigabeposition befindlichem Verriegelungsstift nach radialer Bewegung auf den Verriegelungsstift zu und anschließender axialer Bewegung des Werkzeuges, bis dessen Schenkelenden sich in den Aufnahmen befindet, angesetzt werden kann.

Nachfolgend wird anhand der Figuren ein Ausführungsbeispiel der Erfindung näher erläutert. Im einzelnen zeigen:
- Fig. 1: eine Draufsicht auf einen menschlichen Unterkiefer mit überkronten hinteren Praemolaren und fehlenden Molaren, wobei an den Kronen der hinteren Praemolaren Matrizen eingearbeitet sind,
- Fig. 2: eine Draufsicht auf eine partielle Dentalprothese der beidseitigen Molaren,
- Fig. 3: eine Draufsicht auf den Unterkiefer gemäß Fig. 1 bei eingesetzter Dentalprothese gemäß Fig. 2,
- Fig. 4: eine vergrößerte Darstellung des in Fig. 3 mit IV gekennzeichneten Bereichs, wobei zur Darstellung der Verriegelungsvorrichtung der überkronte Praemolare (festsitzender Zahnersatz) und der erste Molare der Dentalprothese (herausnehmbarer Zahnersatz) im Horizontalschnitt dargestellt sind,
- Fig. 5: eine Seitenansicht gemäß V der Fig. 4 zur Verdeutlichung der Positionierung der Matrize relativ zum Steckriegel der Verbindungsvorrichtung,
- Fig. 6: eine vergrößerte Querschnittsansicht der Verriegelungsvorrichtung, wobei der Steckriegel sich in seiner Verriegelungsposition befindet,
- Fig. 7: eine Ansicht gemäß der Ebene VII-VII der Fig. 6, wobei der Verriegelungsstift nicht geschnitten dargestellt ist,
- Fig. 8: eine Querschnittsansicht der Verriegelungsvorrichtung mit in der Freigabeposition befindlichem Verriegelungsstift und angesetztem Werkzeug zum Herausdrehen der Innenhülse aus der Außenhülse der Aufnahmevorrichtung und
- Fig. 9: eine Seitenansicht auf das Werkzeug gemäß IX der Fig. 8.

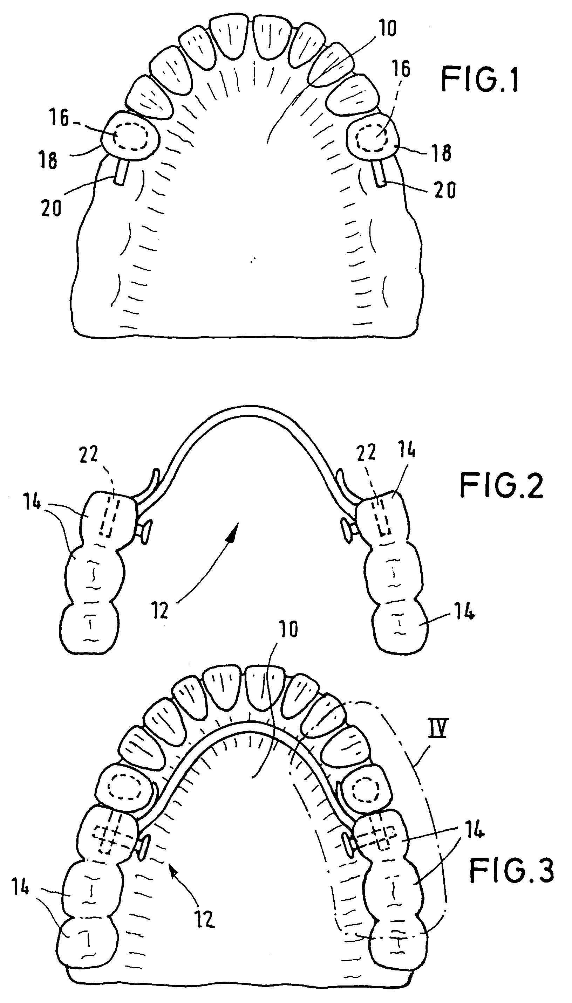

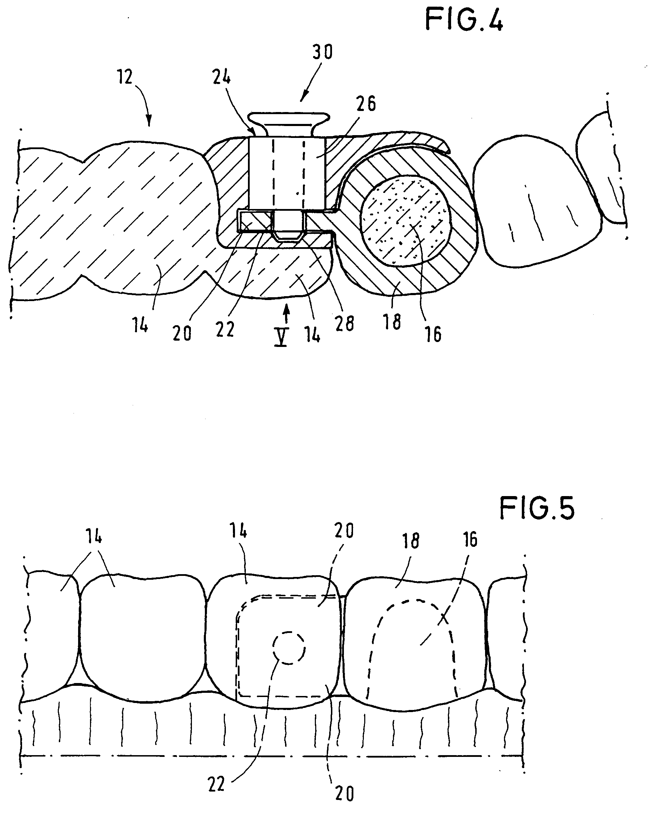

In den Fign. 1 bis 3 sind Draufsichten auf einen menschlichen Unterkiefer 10, bei dem beidseitig die Molaren fehlen, sowie auf eine partielle Dentalprothese 12 der Molaren 14 dargestellt. Die beiden hinteren Praemolaren 16 sind überkront, wobei an den Kronen 18 disto-aproximal sogenannte Matrizen 20 angebracht sind. In jeder Matrize 20 befindet sich ein von lingual nach bukal führendes Durchgangsloch 22 (siehe Fig. 4), durch das hindurch das eine Ende eines Steckriegels 24 hindurchschiebbar ist. Der Steckriegel 24 wird von einer in Fig. 4 bei 26 angedeuteten Führungsvorrichtung gehalten und axial geführt. Diese Führungsvorrichtung 26 ist in dem ersten oder vorderen Molaren 14 der Dentalprothese 12 eingearbeitet. Während die Führungsvorrichtung 26 lingual der Matrize 20 angeordnet ist, befindet sich auf der bukalen Seite der Matrize 20 in dem vorderen Molaren 14 eine Ausnehmung 28 zur Aufnahme des einen Endes des Steckriegels 24, wenn dieser sich in seiner Verriegelungsposition gemäß Fig. 4 befindet, in der das eine Ende des Steckriegels durch das Loch 22 der Matrize 20 hindurch bis in die Ausnehmung 28 ragt. Der Steckriegel 24, die Führungsvorrichtung 26 und die Matrize 20 bilden eine Verriegelungsvorrichtung 30 zum lösbaren verriegeln der Dentalprothese 12 an der Krone 18 des hinteren Praemolaren 16.

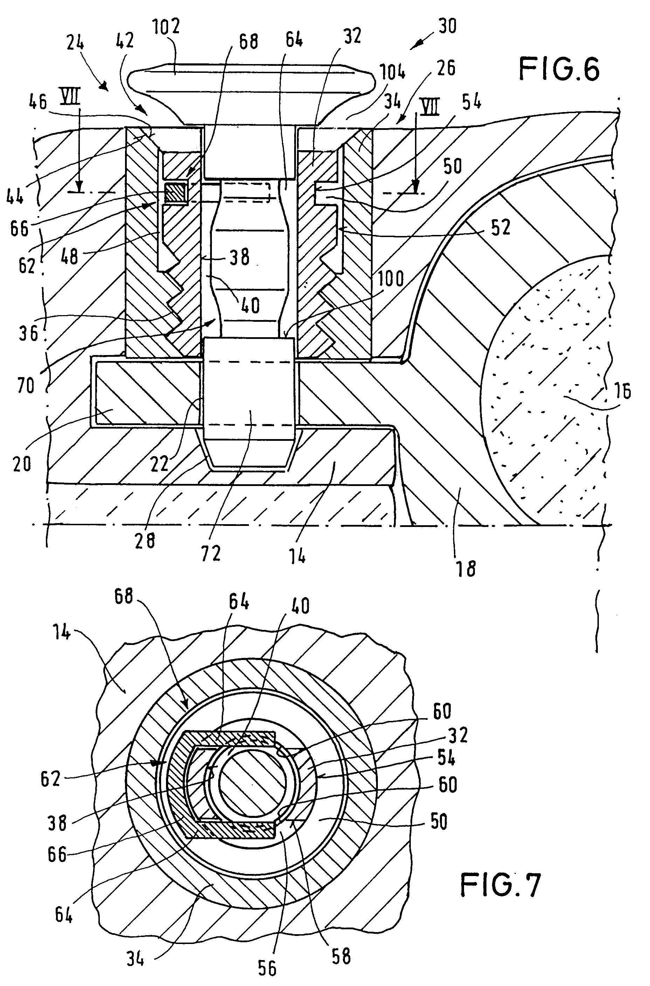

Anhand der Fign. 7 bis 9 soll nachfolgend auf die Konstruktion der einzelnen Komponenten der Verriegelungsvorrichtung 30 eingegangen werden. Die Führungsvorrichtung 26 der Verriegelungsvorrichtung 30 besteht aus einer Innenhülse 32 und einer Außenhülse 34, die jeweils beidseitig offen sind und gleiche axiale Erstreckung aufweisen. Beide Hülsen 32,34 schließen lingual mit der Dentalprothese 12 ab und erstrecken sich bis zur Anlage an bzw. bis nahezu zur Anlage an der Matrize 20. An ihren der Matrize 20 zugewandten innenliegenden axialen Endabschnitten weisen beide Hülsen 32,34 ein Gewinde 36 auf, so daß die Innenhülse 32 mit der Außenhülse 34 verschraubbar ist. Die Außenhülse 34 ist fest in dem vorderen oder ersten Praemolaren 14 der Dentalprothese 12 eingebettet. Bei auf den Unterkiefer 10 aufgesetzter Dentalprothese 12 fluchtet die durch die Innenumfangsfläche 38 der Innenhülse 32 definierte Bohrung 40 mit dem Loch 22 der Matrize 20.

An ihren nach lingual weisenden axialen Enden 42 weisen die Hülsen 32,34 miteinander korrespondierende Außen- bzw. Innenkonusflächen 44,46 auf. Diese Konusflächen 44,46 bilden einen Anschlag zur Begrenzung der axialen Vorschubbewegung der Innenhülse 32 innerhalb der Außenhülse 34, wenn beide miteinander verschraubt werden. Innerhalb des Axialbereichs zwischen den Konusflächen 44,46 und dem Gewinde 36 befindet sich zwischen den beiden Hülsen 32,34 ein umlaufender Zwischenraum 48. In diesem Axialbereich ist die Innenhülse 32 mit einer Umfangsringnut 50 versehen, die in die Außenfläche 52 der Innenhülse 32 eingearbeitet ist.

Wie insbesondere anhand von Fig. 7 zu erkennen ist, ist der Grund 54 dieser Umfangsnut 50 in zwei diametral einander gegenüberliegenden Bereichen abgeflacht. Hierdurch entstehen zwei zueinander parallele Längsnuten 56, deren Nutengründe 58 Durchbrechungen 60 aufweisen. Diese Durchbrechungen 60 sind in der zylindrischen Wandung der Innenhülse 32 ausgebildet und verbinden die Innenumfangsfläche 38 mit der Außenumfangsfläche 52 der Innenhülse 32.

Gemäß Fig. 7 ist in die Umfangsnut 50 bzw. die Längsnuten 56 ein in Draufsicht U-förmiges Federelement 62 eingesetzt. Das Federelement 62 weist zwei zueinander parallele Federschenkelabschnitte 64 auf, die über einen Basisabschnitt 66 miteinander verbunden sind. Die beiden Federschenkelabschnitte 64 sind von den Längsnuten 56 aufgenommen, während sich der Basisabschnitt 66 in einem der beiden die Längsnuten 56 miteinander verbindenden Abschnitt der Umfangsnut 50 erstreckt. Der Basisabschnitt 66 ist gekrümmt, wobei seine Krümmung derjenigen der Umfangsnut 50 entspricht. Die Tiefe der Umfangsnut 50 ist derart gewählt, daß das Federelement 62 vollständig von der Umfangsnut 50 und den Längsnuten 56 aufgenommen ist, ohne radial über die Außenumfangsfläche 52 der Innenhülse 32 überzustehen.

In dem oben beschriebenen Einsatzzustand des Federelementes 62 in der Umfangsnut 50 bzw. den Längsnuten 56 ragen die Federschenkelabschnitte 64 im Bereich der Durchbrechungen 60 über die Innenumfangsfläche 38 der Innenhülse 32 über (s. Fig. 7). Wie im folgenden beschrieben wird, wirken die Federschenkelabschnitte 64 mit Anschlagflächen und Umfangsschrägflächen des Steckriegels 24 zusammen, um einerseits dessen axiale Verschiebung zu begrenzen und um andererseits den Steckriegel in den Endverschiebungsstellungen gegen ungewollte Axialverschiebungen zu sichern und die Bewegung des Steckriegels 24 in die Endverschiebungsstellungen zu unterstützen. Insofern handelt es sich bei dem U-förmigen Federelement 62 um eine Rückhalte-Federvorrichtung 68, die an der Führungsvorrichtung 26 für den Steckriegel 24 angebracht ist.

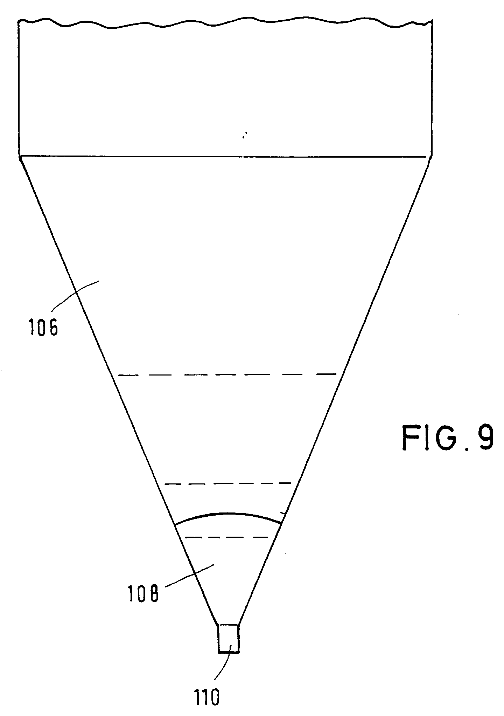

Gemäß Fign. 7 und 9 weist der Steckriegel 24 einen Verriegelungsstift 70 auf, der axial verschiebbar in der Innenhülse 32 geführt ist. Der Verriegelungsstift 70 ist mit einem der Matrize 20 zugewandten bukalen Verriegelungsende 72 und mit einem lingualen Betätigungsende 74 versehen. Im Bereich dieser beiden Enden liegt der Verriegelungsstift 70 mit seiner Außenumfangsfläche an der Innenumfangsfläche 38 der Innenhülse 32 mit geringem Spiel an, so daß sich der Verriegelungsstift 70 leichtgängig in der Innenhülse 32 vor- und zurückverschieben läßt, ohne merklich radial bewegbar zu sein. Im Mittel-Axialabschnitt 76 zwischen Verriegelungsende 72 und Betätigungsende 74 weist der Verriegelungsstift 70 einen merklichen Abstand zur Innenumfangsfläche 38 der Innenhülse 32 auf. Dieser Mittel-Axialabschnitt 76 setzt sich aus folgenden Teilabschnitten zusammen (Reihenfolge ausgehend vom Verriegelungsende 72 bis zum Betätigungsende 74): einem ersten Verjüngungsabschnitt 78 mit zylindrischer Umfangsfläche 80, einem ersten konischen Abschnitt 82 mit konischer Umfangsschrägfläche 84, einem mittleren Abschnitt 86 mit zylindrischer Umfangsfläche 88, einem zweiten konischen Abschnitt 90 mit konischer Umfangsschrägfläche 92 und einem zweiten Verjüngungsabschnitt 94 mit zylindrischer Umfangsfläche 96. Die beiden Verjüngungsabschnitte 78 und 94 sind über radiale Anschlagflächen 98 bzw. 100 mit den Umfangsflächen der beiden Enden 72,74 des Verriegelungsstiftes 70 verbunden.

Während der Durchmesser des Verriegelungsstiftes 70 in seinen Verjüngungsabschnitten 78,94 im wesentlichen gleich dem Abstand der Innenseiten der Federschenkelabschnitte 64 des U-förmigen Federelementes 62 ist, weist der Verriegelungsstift 70 in seinem mittleren Abschnitt 86 einen Durchmesser auf, der größer ist als dieser Abstand. Die konischen Abschnitte 82 und 90 sind als Übergangsabschnitte ausgebildet, innerhalb derer der Durchmesser des Verriegelungsstiftes 70 von dem Wert der Verjüngungsabschnitte 78 bzw. 94 auf den Wert des mittleren Abschnitts 82 graduell zunimmt bzw. abnimmt. Die axiale Erstreckung der Verjüngungsabschnitte 78,94 ist jeweils gleich der Dicke (Erstreckung in axialer Richtung des Verriegelungsstiftes 70) der Federschenkelabschnitte 64 des U-förmigen Federelementes 62 gewählt.

Mittels der vorgenannten Konstruktion und Ausgestaltung des Verriegelungsstiftes im Zusammenspiel mit dem U-förmigen Federelement 62 wird der Verriegelungsstift 70 wie folgt in seinen Endstellungen gegen ungewollte axiale Verschiebungen gesichert und bei axialer Verschiebung in die Endstellungen unterstützt, was nachfolgend kurz beschrieben wird.

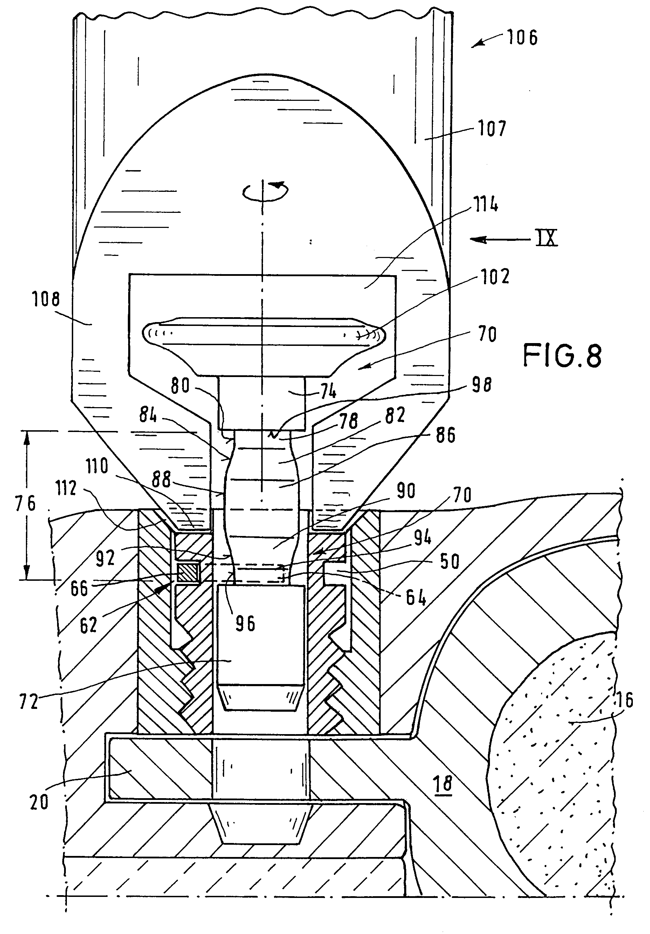

In der Verriegelungsposition gemäß Fig. 6 steht das Verriegelungsende 72 des Verriegelungsstiftes 70 über das der Matrize 20 zugewandte innenliegende Ende von Innenhülse 32 und Außenhülse 34 über, wobei das Verriegelungsende 72 sich durch das Loch 22 der Matrize 20 hindurch bis in die Ausnehmung 28 hindurch erstreckt. Wie in den Figuren gezeigt, ist das Verriegelungsende 72 konisch verjüngt. In diesem Verriegelungszustand umschließen die Federschenkelabschnitte 64 des Federelementes 62 den Verriegelungsstift 70 im Bereich von dessen erstem Verjüngungsabschnitt 78, der an das Betätigungsende 74 des Verriegelungsstiftes 70 angrenzt. Ferner liegen die Federschenkelabschnitte 64 an der Anschlagfläche 98 im Übergangsbereich zwischen ersten Verjüngungsabschnitt 78 und Betätigungsende 74 des Verriegelungsstiftes 70 an. Hierdurch wird verhindert, daß der Verriegelungsstift über die Verriegelungsposition hinaus weiter in die Innenhülse 32 hineingeschoben werden kann. In der Verriegelungsposition ragt ein am Betätigungsende 74 angebrachter Flansch oder Kopf 102 des Verriegelungsstiftes 70 unter Bildung eines Ringzwischenraumes 104 lingual über den vordersten Molaren 14 der Dentalprothese 12 über. Eine ungewollte axialer Verschiebung des Verriegelungsstiftes 70 aus der Verriegelungsposition in Richtung auf die Freigabeposition gemäß Fig. 8 wird dadurch verhindert, daß in einem solchen Fall die Umfangsschrägfläche 84 des sich an den ersten Verjüngungsabschnitts 78 anschließenden ersten konischen Abschnitts 82 des Verriegelungsstiftes 70 in Anlage mit den Federschenkelabschnitten 64 gelangt. Bei einer axialen Verschiebung werden die Federschenkelabschnitte 64 über die Umfangsschrägfläche 84 radial nach außen gelenkt, wodurch sie eine radial einwärts gerichtete auf den Verriegelungsstift 70 wirkende Rückstellkraft erzeugen. Erst unter Aufbringung einer auf den Verriegelungsstift 70 wirkenden Axialkraft zur Überwindung der radial einwärts gerichteten Rückstellkraft der Federschenkelabschnitte 64 läßt sich der Verriegelungsstift 70 aus der Verriegelungsposition gemäß Fig. 6 herausbewegen. Dabei gleiten die Innenseiten der Federschenkelabschnitte 64 zunächst an der Umfangsschrägfläche 82 des ersten konischen Abschnittes und anschließend an der zylindrischen Umfangsfläche 88 des mittleren Abschnitts 86 entlang. Sobald der Verriegelungsstift 70 so weit axial aus der Innenhülse 32 herausgezogen ist, daß die Innenseiten der Federschenkelabschnitte 64 die Umfangsschrägfläche 92 des zweiten konischen Abschnitts 90 berühren, werden die von den Federschenkelabschnitten 64 erzeugten Rückstellkräfte in eine axiale Kraftkomponente zur Unterstützung der weiteren axialen Verschiebung des Verriegelungsstiftes 70 umgesetzt. Im Idealfall erfolgt die weitere axiale Verschiebung selbsttätig einzig und allein aufgrund der mit der Umfangsschrägfläche 92 zusammenwirkenden vorgespannten Federschenkelabschnitte 64. Erreicht der Verriegelungsstift 70 schließlich seine Freigabeposition gemäß Fig. 8, so umschließen die Federschenkelabschnitte 64 den dem Verriegelungsende 72 zugewandten zweiten Verjüngungsabschnitt 94, wobei die weitere Bewegung des Verriegelungsstiftes 70 über die Freigabeposition hinaus dadurch verhindert wird, daß die Federschenkelabschnitte 64 an die Anschlagfläche 100 anschlagen. In der Freigabeposition gemäß Fig. 8 ist das Verriegelungsende 72 des Verriegelungsstiftes 70 hinter das der Matrize 20 zugewandte innenliegende axiale Ende der Innenhülse 32 zurückbewegt. Der Kopf 102 am Betätigungsende 74 des Verriegelungsstiftes 70 ist von der Innenhülse 32 axial beabstandet.

In dem hier beschriebenen Ausführungsbeispiel handelt es sich bei den bukal und lingual der Matrize 20 angeordneten Elementen der Verriegelungsvorrichtung 30 um separate Teile. Alternativ hierzu kann in den vordersten Molaren der Dentalprothese 12 auch eine sogenannte Patrize eingebettet sein, über die lingual und bukal angeordneten Teile der Verriegelungsvorrichtung 30 einstückig miteinander ausgebildet sind.

Wie in Fig. 8 angedeutet, läßt sich die Innenhülse 32 mittels eines Spezialwerkzeuges 106 aus der Außenhülse 34 herausschrauben, wenn sich der Verriegelungsstift 70 in seiner Freigabeposition befindet. Das Werkzeug 106 weist ein Griffteil 107 auf, an dem zwei einander gegenüberliegende Schenkel 108 angeordnet sind, die freie Enden 110 aufweisen. Die freien Enden 110 sind zur Aufnahme durch Vertiefungen 112 in der stirnseitigen lingualen Ringfläche der Innenhülse 32 vorgesehen. In axialer Projektion auf den Verriegelungsstift 70 betrachtet, überragt der Kopf 102 des Verriegelungsstiftes 70 diese diametral gegenüberliegenden Vertiefungen 112. Daher weisen die Schenkel 108 an ihren Innenseiten Ausnehmungen 114 auf, in denen, wie in Fig. 8 zu sehen ist, sich der Kopf 102 des Verriegelungsstiftes 70 befindet, wenn die freien Enden 110 der Schenkel 108 sich in den Vertiefungen 112 der Innenhülse 32 befinden.

## Patentansprüche

1. Steckriegel für eine Vorrichtung zur lösbaren Befestigung eines herausnehmbaren Zahnersatzes an einem festsitzenden Zahnersatz, mit
- einem Verriegelungsstift (70),
- einer Führungsvorrichtung (26) für den Verriegelungsstift (70), in der der Verriegelungsstift (70) zwischen einer Verriegelungsposition und einer Freigabeposition axial verschiebbar geführt ist, und
- einer an oder in der Führungsvorrichtung (26) angeordneten Rückhalte-Federvorrichtung (68) zum Halten des Verriegelungsstiftes (70) sowohl in der Verriegelungsposition als auch in der Freigabeposition zwecks Sicherung des Verriegelungsstiftes (70) gegenunbeabsichtigte Axialverschiebungen aus der Verriegelungs- bzw. der Freigabeposition heraus,
**dadurch gekennzeichnet,**
- daß der Verriegelungsstift (70) mindestens einen konischen Axialabschnitt (82,90) mit einer umlaufenden und schräg zur Axialerstreckung des Verriegelungsstiftes (70) gerichteten Umfangsschrägfläche (84,96) zum Umsetzen der durch die Rückhalte-Federvorrichtung (68) erzeugbaren radial auf den Verriegelungsstift (70) wirkenden Radialkraft in eine axial auf den Verriegelungsstift (70) wirkende Axialkraft zur axialen Verschiebung des Verriegelungsstiftes (70) oder zur Unterstützung einer axialen Verschiebung des Verriegelungsstiftes (70) in die Verriegelungs- und/oder Freigabeposition aufweist.

2. Steckriegel nach Anspruch 1, dadurch gekennzeichnet, daß die Rückhalte-Federvorrichtung (68) ein radial auf den Verriegelungsstift (70) einwirkendes Halteelement aufweist.

3. Steckriegel nach Anspruch 1 oder 2, dadurch gekennzeichnet, daß die Führungsvorrichtung (26) und/oder die Rückhalte-Federvorrichtung (68) und/oder der Verriegelungsstift (70) eine Verschiebungsbegrenzungsvorrichtung (98,100) zur Begrenzung der Verschiebung des Verriegelungsstiftes (70) über die Verriegelungs- und die Freigabeposition hinaus aufweist.

4. Steckriegel nach einem der Ansprüche 1 bis 3, dadurch gekennzeichnet, daß der Verriegelungsstift (70) zwei axial voneinander beabstandete, konische Axialabschnitte (82,90) aufweist, die die Radialkraft der Rückhalte-Federvorrichtung (68) in einander entgegengesetzt gerichtete Axialkräfte umsetzen.

5. Steckriegel nach Anspruch 4, dadurch gekennzeichnet, daß der Verriegelungsstift (70) einen ballig ausgebildeten Axialabschnitt aufweist, dessen beide Endabschnitte konisch ausgebildet sind.

6. Steckriegel nach einem der Ansprüche 1 bis 5, dadurch gekennzeichnet, daß die Rückhalte-Federvorrichtung (68) ein den Verriegelungsstift (70) seitlich umgreifendes U-förmiges Federelement (62) aufweist, das zwei Federschenkelabschnitte (64) und einen diese verbindenden Basisabschnitt (66) aufweist, wobei die beiden Federschenkelabschnitte (64) den Verriegelungsstift (70) in der Verriegelungsposition und in der Freigabeposition gegen unbeabsichtigte axiale Verschiebungen sichern und halten.

7. Steckriegel nach Anspruch 6, dadurch gekennzeichnet, daß der Verriegelungsstift (70) zwei axial beabstandete Verjüngungsbereiche (78,94) aufweist, innerhalb derer der Verriegelungsstift (70) einen Durchmesser aufweist, der kleiner ist als der Durchmesser des Verriegelungsstiftes (70) innerhalb zumindest eines Teils des sich zwischen den beiden Verjüngungsbereichen (78,94) erstreckenden Axialabschnitt, und daß die beiden Federschenkelabschnitte (64) des Federelementes (62) zumindest in diesem Axialabschnitt des Verriegelungsstiftes (70) zwischen den beiden Verjüngungsbereichen (78,94) und außerhalb derselben unter radial nach außen gerichteter elastischer Verbiegung anliegen.

8. Steckriegel nach Anspruch 7, dadurch gekennzeichnet, daß die Verjüngungsbereiche (78,94) und das Federelement (62) im wesentlichen die gleichen Abmessungen in Axialerstreckung des Verriegelungsstiftes (70) betrachtet aufweisen.

9. Steckriegel nach Anspruch 7 oder 8, dadurch gekennzeichnet, daß sich an die einander zugewandten Enden der Verjüngungsbereiche (78,94) die konischen Axialabschnitte (82,90) anschließen.

10. Steckriegel nach einem der Ansprüche 7 bis 9, dadurch gekennzeichnet, daß der Verriegelungsstift (70) zwischen den beiden Verjüngungsbereichen (78,94) eine ballig ausgebildete Umfangsfläche aufweist.

11. Steckriegel nach einem der Ansprüche 7 bis 10, dadurch gekennzeichnet, daß an den einander abgewandten Enden der beiden Verjüngungsbereiche (78,94) insbesondere radial verlaufende Anschlagflächen (98,100) für die Federschenkelabschnitte (64) des Federelementes (62) zur Begrenzung der Verschiebung des Verriegelungsstiftes (70) über dessen Verriegelungs- und Freigabeposition hinaus angrenzen.

12. Steckriegel nach einem der Ansprüche 1 bis 11, dadurch gekennzeichnet, daß der Verriegelungsstift (70) ein Verriegelungsende (72) zum Verriegelungszusammenwirken mit einer an dem festsitzenden Zahnersatz angeordneten Aufnahmevorrichtung (22) und ein Betätigungsende (74) aufweist, daß die Führungsvorrichtung (26) - in axialer Erstreckung des Verriegelungsstiftes (70) betrachtet - ein der Aufnahmevorrichtung (22) zugewandtes erstes und ein der Aufnahmevorrichtung (22) abgewandtes zweites Ende (42) aufweist und daß das Verriegelungsende (72) des Verriegelungsstiftes (70) in der Verriegelungsposition über das erste Ende der Führungsvorrichtung (26) übersteht und in der Freigabeposition mit dem ersten Ende der Führungsvorrichtung (26) fluchtet oder geringfügig gegenüber diesem zurückgesprungen angeordnet ist.

13. Steckriegel nach einem der Ansprüche 6 bis 12, dadurch gekennzeichnet, daß die Führungsvorrichtung (26) eine beidendig offene Innenhülse (32) zur Aufnahme und Führung des Verriegelungsstiftes (70) aufweist, die eine dem Verriegelungsstift (70) zugewandte Innenumfangsfläche (38) und eine Außenumfangsfläche (52) mit zwei zueinander parallel verlaufenden Nuten (56) aufweist, die derart ausgebildet sind, daß sich zwei diametral gegenüberliegende Durchbrechungen (60) in der Innenhülse (32) ergeben, und daß das Federelement (62) mit seinen Federschenkelabschnitten (64) in den Nuten (56) liegend angeordnet ist, die im Bereich der Durchbrechungen (60) radial über die Innenumfangsfläche (38) der Innenhülse (32) überstehen.

14. Steckriegel nach Anspruch 13, dadurch gekennzeichnet, daß zwei der paarweise einander gegenüberliegenden Axialenden der Nuten (56) über eine in der Außenumfangsfläche (52) der Innenhülse (32) ausgebildete Verbindungsnut (50) zur Aufnahme des Basisabschnitts (66) des Federelements (62) verbunden sind.

15. Steckriegel nach Anspruch 12 oder 13, dadurch gekennzeichnet, daß die Führungsvorrichtung (26) zur festen Verbindung mit dem herausnehmbaren Zahnersatz eine beidendig offene Außenhülse (34) aufweist, in der die Innenhülse (32) festlegbar ist.

16. Steckriegel nach Anspruch 15, dadurch gekennzeichnet, daß die Innen- und die Außenhülse (32,34) jeweils zylindrisch ausgebildet und miteinander verschraubbar sind.

17. Steckriegel nach Anspruch 15, dadurch gekennzeichnet, daß die Außenhülse (34) eine Konus-Innenfläche (46) und die Innenhülse (32) eine Konus-Außenfläche (44) an ihren der Aufnahmevorrichtung (20) jeweils abgewandten axialen Enden (42) aufweisen.

## Claims

1. A plug-in fastener to be used in a device for releasable attachment of a removable dental prosthesis to a fixed dental prosthesis, comprising
- a locking pin (70),
- a guide means (26) for the locking pin (70), for axially guiding the locking pin (70) therein between a locking position and a release position, and
- a retention spring means (68) arranged on or in the guide means (26) for holding the locking pin (70) in the locking position and in the release position to thus secure the locking pin (70) against undesired axial displacement from the locking and the release position, respectively,
**characterized in**
- that the locking pin (70) comprises at least one conical axial portion (82,90) having a continuous peripheral inclined surface (84,96) arranged at an inclination to the axial extension of the locking pin (70) and provided to transform the radial force to be generated by the retention spring means (68) and acting radially on the locking pin (70) into an axial force acting axially on the locking pin (70) for axially displacing the locking pin (70) or supporting an axial displacement of the locking pin (70) into the locking and/or the release position.

2. The plug-in fastener according to claim 1, characterized in that the retention spring means (68) comprises a holding element acting radially on the locking pin (70).

3. The plug-in fastener according to claim 1 or 2, characterized in that the guide means (26) and/or the retention spring means (68) and/or the locking pin (70) comprise a displacement limiting means (98,100) for limiting the displacement of the locking pin (70) beyond the locking and/or the release position.

4. The plug-in fastener according to any one of claims 1 to 3, characterized in that the locking pin (70) comprises two axially spaced conical axial portions (82,90) to transform the radial force of the retention spring means (68) into mutually opposite axial forces.

5. The plug-in fastener according to claim 4, characterized in that the locking pin (70) comprises a bulged axial portion having both of its end portions formed in a conical shape.

6. The plug-in fastener according to any one of claims 1 to 5, characterized in that the retention spring means (68) comprises a U-shaped spring element (62) laterally engaging the locking pin (70), said spring element (62) comprising two spring leg portions (64) and a base portion (66) connecting the spring leg portions (64), with the two spring leg portions (64) holding the locking pin (70) and securing it against undesired axial displacement while the locking pin (70) is in the locking position and in the release position.

7. The plug-in fastener according to claim 6, characterized in that the locking pin (70) comprises two axially spaced narrowed portions (78,94) where the locking pin (70) has a diameter inferior to the diameter of the locking pin (70) within at least a part of the axial portion extending between the two narrowed portions (78,94), and that the two spring leg portions (64) of the spring element (62) at least in said axial portion of the locking pin (70) between the two narrowed portions (78,94) and outside the narrowed portions (78,94) are arranged to abut under a radially outward elastic bias.

8. The plug-in fastener according to claim 7, characterized in that the narrowed portions (78,94) and the spring element (62) have substantially the same dimensions when viewed in the axial extension of the locking pin (70).

9. The plug-in fastener according to claim 7 or 8, characterized in that the mutually confronting ends of the narrowed portions (78,94) are joined by the conical axial portions (82,90).

10. The plug-in fastener according to any one of claims 7 to 9, characterized in that the locking pin (70) comprises a bulging peripheral surface between the two narrowed portions (78,94).

11. The plug-in fastener according to any one of claims 7 to 10, characterized in that the mutually averted ends of the two narrowed portions (78,94) have arranged adjacent thereto particularly radially extending abutment faces (98,100) for the spring leg portions (64) of the spring element (62), provided for limiting the displacement of the locking pin (70) beyond its locking and/or the release position.

12. The plug-in fastener according to any one of claims 1 to 11, characterized in that the locking pin (70) comprises a locking end (72) for locking engagement with a receiving means (22) arranged on the fixed dental prosthesis, and an actuating end (74), that the guide means (26) - when viewed in the axial extension of the locking pin (70) - has a first end facing towards the receiving means (22) and a second end facing away from the receiving means (22), and that the locking end (72) of the locking pin (70) in the locking position projects beyond the first end of the guide means (26) and in the release position is flush with the first end of the guide means (26) or is arranged slightly set back relative thereto.

13. The plug-in fastener according to any one of claims 6 to 12, characterized in that the guide means (26) comprises an inner shell (32) for receiving and guiding the locking pin (70), said inner shell (32) being open on both ends and comprising an inner peripheral surface (38) facing towards the locking pin (70) and an outer peripheral surface (52) provided with two mutually parallel grooves (56) configured to provide to diametrically confronting cutouts (60) in the inner shell (32), and that the spring element (62) has its spring leg portions (64) positioned in a lying arrangement in the grooves (56), with the spring leg portions (64) radially projecting beyond the inner peripheral surface (38) of the inner shell (32) in the region of the cutouts (60).

14. The plug-in fastener according to claim 13, characterized in that two of the pair-wise confronting axial ends of the grooves (56) are connected by a connecting groove (50) formed in the outer peripheral surface (52) of the inner shell (32) for receiving the base portion (66) of the spring element (62).

15. The plug-in fastener according to claim 12 or 13, characterized in that the guide means (26) for tight connection with the removable dental prosthesis comprises an outer shell (34) being open on both ends and being adapted to have the inner shell (32) fixed therein.

16. The plug-in fastener according to claim 15, characterized in that the inner and outer shells (32,34) are each of a cylindrical shape and can be fitted to each other by a screw connection.

17. The plug-in fastener according to claim 15, characterized in that the outer shell (34) comprises a conical inner surface (46) and the inner shell (32) comprises a conical outer surface (44), said surfaces being arranged on the respective axial ends (42) of the shells facing away from the receiving means (22).

## Revendications

1. Verrouillage à emboîtement pour un dispositif pour la fixation démontable d'une prothèse dentaire amovible sur une prothèse dentaire fixe, comprenant :
• une broche de verrouillage [70],
• un dispositif de guidage [26] pour la broche de verrouillage [70], dans lequel la broche de verrouillage [70] est guidée pour se déplacer en translation axiale entre une position de verrouillage et une position de déverrouillage et
• un dispositif à ressort de retenue [68] disposé sur ou dans le dispositif de guidage (26) pour maintenir la broche de verrouillage [70] aussi bien dans la position de verrouillage que dans la position de déverrouillage pour bloquer la broche de verrouillage [70] à l'encontre des déplacements axiaux inopinés dans le sens qui s'éloigne de la position de verrouillage ou de la position de déverrouillage,
**caractérisé**
en ce que la broche de verrouillage [70] comprend au moins un segment axial conique [82, 90] présentant une surface oblique circonférentielle [84, 96] s'étendant périphériquement et orientée obliquement par rapport à la dimension axiale de la broche de verrouillage [70] pour transformer la force radiale pouvant être produite par le dispositif élastique de retenue [68] et qui agit radialement sur la broche de verrouillage [70] en une force axiale agissant axialement sur la broche de verrouillage [70] pour déterminer une translation axiale de la broche de verrouillage [70] ou pour assister une translation axiale de la broche de verrouillage [70] en direction de la position de verrouillage et/ou de la position de déverrouillage.

2. Verrouillage à emboîtement selon la revendication 1, caractérisé en ce que le dispositif élastique de retenue [68] présente un élément de retenue agissant radialement sur la broche de verrouillage [70].

3. Verrouillage à emboîtement selon la revendication 1 ou 2, caractérisé en ce que le dispositif de guidage [26] et/ou le dispositif élastique de retenue [68] et/ou la broche de verrouillage [70] présentent un dispositif de limitation de translation [98, 100] destiné à imiter la translation de la broche de verrouillage [70] au-delà de la position de verrouillage et de la position de déverrouillage.

4. Verrouillage à emboîtement selon une des revendications 1 à 3, caractérisé en ce que la broche de verrouillage [70] présente deux segments axiaux coniques [82, 90] éloignés axialement l'un de l'autre, qui transforment la force radiale du dispositif élastique de retenue [68] en forces axiales orientées l'une en sens inverse de l'autre.

5. Verrouillage à emboîtement selon la revendication 4, caractérisé en ce que la broche de verrouillage [70] présente un segment axial de configuration bombée dont les deux segments terminaux sont de forme conique.

6. Verrouillage à emboîtement selon une des revendications 1 à 5, caractérisé en ce que le dispositif élastique de retenue [68] présente un élément élastique [62] en forme de U qui encadre latéralement la broche de verrouillage [70], élément qui présente deux segments [64] formant branches de ressort et un segment de base [66] qui les relie, les deux segments formant branche de ressort [64] maintenant et retenant la broche de verrouillage [70] dans la position de verrouillage et dans la position de déverrouillage en la protégeant des translations axiales inopinées.

7. Verrouillage à emboîtement selon la revendication 6, caractérisé en ce que la broche de verrouillage [70] présente deux régions de rétrécissement [78, 94] espacées axialement dans lesquelles la broche de verrouillage [70] possède un diamètre qui est plus petit que le diamètre de la broche de verrouillage [70] dans au moins une partie du segment axial s'étendant entre les deux zones de rétrécissement [78, 94] et en ce que les deux segments [64] formant branches de ressort de l'élément élastique [62] sont en appui, avec une flexion élastique dirigée radialement vers l'extérieur, au moins dans ce segment axial de la broche de verrouillage [70] situé entre les deux régions de rétrécissement [78, 94] et en dehors de ces régions.

8. Verrouillage à emboîtement selon la revendication 7, caractérisé en ce que les régions de rétrécissement [78, 94] et l'élément élastique [62] présentent sensiblement les mêmes dimensions, considérées dans l'extension axiale de la broche de verrouillage [70].

9. Verrouillage à emboîtement selon la revendication 7 ou 8, caractérisé en ce que les segments axiaux coniques [82, 90] se raccordent aux extrémités des régions de rétrécissement [78, 94] qui sont dirigées l'une vers l'autre.

10. Verrouillage à emboîtement selon une des revendications 7 à 9, caractérisé en ce que la broche de verrouillage [70] présente une surface périphérique de forme bombée entre les deux régions de rétrécissement [78, 94].

11. Verrouillage à emboîtement selon une des revendications 7 à 10, caractérisé en ce qu'aux extrémités des deux régions de rétrécissement [78, 94] qui sont l'une à l'opposé de l'autre, se trouvent des surfaces de butée [98, 100] s'étendant en particulier radialement, prévues pour les segments [64] des branches de ressort de l'élément élastique [62], pour limiter la translation de la broche de verrouillage [70] au-delà de la position de verrouillage et de déverrouillage de cette broche.

12. Verrouillage à emboîtement selon une des revendications 1 à 11, caractérisé en ce que la broche de verrouillage [70] présente une extrémité de verrouillage [72] destinée à coopérer pour le verrouillage avec un dispositif récepteur [22] agencé sur la prothèse dentaire fixe et une extrémité d'actionnement [74], en ce que le dispositif de guidage (26) présente - considéré dans l'extension axiale de la broche de verrouillage [70] - une première extrémité dirigée vers le dispositif de réception [22] et une deuxième extrémité [42] éloignée du dispositif de réception [22], et en ce que l'extrémité de verrouillage [72] de la broche de verrouillage [70] déborde au-delà de la première extrémité du dispositif de guidage [26] dans la position de verrouillage tandis que, dans la position de déverrouillage, elle est à l'affleurement de la première extrémité du dispositif de guidage [26] ou légèrement en retrait par rapport à celle-ci.

13. Verrouillage à emboîtement selon une des revendications 6 à 12, caractérisé en ce que le dispositif de guidage [26] comprend une douille intérieure [32] ouverte à ses deux extrémités, destinée à recevoir et guider la broche de verrouillage [70], et qui présente elle-même une surface circonférentielle intérieure [38] dirigée vers la broche de verrouillage [70] et une surface circonférentielle extérieure [52] munie de deux gorges [56] s'étendant parallélement entre elles, qui sont conformées de manière qu'il se forme deux ajours [60] diamétralement opposés dans la douille intérieure [32] et en ce que l'élément élastique [62] est disposé dans les gorges [56] par ces segments formant branches de ressort [64], qui, dans la région des ajours [60] font saillie radialement au-delà de la périphérie intérieure [38] de la douille intérieure [32].

14. Verrouillage à emboîtement selon la revendication 13, caractérisé en ce que deux des extrémités axiales, mutuellement opposées en une paire, des gorges [56] sont réunies par une gorge de liaison [50] formée dans la surface périphérique extérieure [52] de la douille intérieure [32], pour recevoir le segment de base [66] de l'élément élastique [62].

15. Verrouillage à emboîtement selon la revendication 12 ou 13, caractérisé en ce que le dispositif de guidage [26] présente pour établir une liaison rigide avec la prothèse dentaire amovible, une douille extérieure [34] ouverte à ses deux extrémités, dans laquelle la douille intérieure [32] peut être immobilisée.

16. Verrouillage à emboîtement selon la revendication 15, caractérisé en ce que les douilles intérieure et extérieure [32, 34] sont de forme cylindrique et peuvent être assemblées par vissage.

17. Verrouillage à emboîtement selon la revendication 15, caractérisé en ce que la douille extérieure [34] possède une surface intérieure conique [46] et la douille intérieure [32] une surface extérieure conique [44] à leurs extrémités axiales [42] éloignées du dispositif de réception [20].
